# DEMANDE DE BREVET EUROPEEN

(11) **EP 4 197 942 A1**
(43) Date de publication de la demande: **21.06.2023**
(21) Numéro de dépôt: 21215824.0
(22) Date de dépôt: 20.12.2021
(51) Int. Cl.: B65G 27/00, B65G 27/04, B65G 27/32, B65G 43/08

(54) **PROCÉDÉ DE CONTRÔLE D'UNE MACHINE VIBRANTE ET SYSTÈME DE CONTRÔLE CORRESPONDANT**

(71) Demandeur: Asyril SA, 1690 Villaz-St-Pierre (CH)
(72) Inventeur: Loayza, Timothy, 1093 La Conversion (CH); SONCINI, Daniel, 1652 Botterens (CH); PERRITAZ, Damien, 1695 Villarlod (CH)
(74) Mandataire: Bovard SA Neuchâtel

(57) **Abrégé**

La présente invention concerne un procédé de contrôle d'une machine vibrante (10) comprenant un organe mobile (20) muni d'une surface de réception (22) de produits (2) et adapté pour vibrer sous l'effet d'un actionneur (30). Le procédé comprend la transmission d'un signal de commande à l'actionneur (30) pour faire vibrer l'organe mobile (20), la génération d'un signal représentatif des ondes acoustiques induites par la vibration à l'aide d'un capteur acoustique (51, 52), et le traitement du signal pour déterminer une quantité et/ou d'une distribution de produits (2) sur la surface de réception (22). L'invention concerne également un système de contrôle correspondant.

## Description

### Domaine technique de l'invention

L'invention concerne les machines vibrantes de façon générale, et en particulier les dispositifs d'alimentation vibrants tels que les trémies ou convoyeurs vibrants ou encore les entonnoirs à spirales (aussi appelés bols) vibrants.

L'invention concerne plus spécifiquement le contrôle de telles machines vibrantes, et en particulier le contrôle de leur contenu.

### État de la technique

Les machines vibrantes sont notamment utilisées pour la distribution ou la séparation de produits, par exemple dans des usines de fabrication ou de conditionnement.

Ces machines comprennent typiquement un organe mobile muni d'au moins une surface de réception des produits, l'organe mobile étant adapté pour vibrer sous l'effet d'un actionneur de sorte que ladite surface de réception délivre des produits.

Un problème récurrent dans l'utilisation de ce type de machine est le contrôle de leur contenu : si l'organe mobile ne contient aucun produit, il faut le réalimenter en produits, et si au contraire il est trop plein, il faut stopper ou diminuer l'approvisionnement de la machine. Par ailleurs, la quantité et/ou la distribution de produits à l'intérieur de l'organe mobile influent sur la vitesse de délivrance des produits par la machine. Plus l'organe mobile est plein et/ou plus les produits sont proches de la sortie, plus les produits sont délivrés rapidement. Pour ajuster la durée de vibration nécessaire à la délivrance d'un nombre défini de produits, il faut donc pouvoir contrôler le remplissage de l'organe mobile.

On connaît déjà des systèmes de contrôle de telles machines utilisant des capteurs de poids, ou des capteurs optiques, dont les mesures sont utilisées dans des boucles de rétroaction pour ajuster le fonctionnement de la machine. Mais ces capteurs sont souvent chers, peu adaptés à des environnements industriels, et nécessitent des montages parfois complexes. Il existe en outre un besoin d'augmenter la fiabilité de tels systèmes de contrôle.

### Résumé de l'invention

Un but de la présente invention est de fournir un procédé et un système de contrôle de machines vibrantes permettant de résoudre les problèmes précités.

Ce but est atteint avec un procédé de contrôle d'une machine vibrante comprenant un organe mobile muni d'au moins une surface de réception de produits, l'organe mobile étant adapté pour vibrer sous l'effet d'un actionneur de sorte que ladite surface de réception délivre des produits, le procédé de contrôle comprenant :
a) la transmission d'un signal de commande à l'actionneur pour faire vibrer l'organe mobile,
b) la génération, à l'aide d'au moins un capteur acoustique, d'au moins un signal représentatif des ondes acoustiques induites par la vibration de l'organe mobile, et
c) le traitement dudit au moins un signal généré à l'étape b) pour déterminer une quantité Q et/ou une distribution D de produits sur ladite surface de réception, ledit traitement mettant en œuvre au moins un algorithme d'apprentissage automatique.

Les machines vibrantes considérées dans le cadre de la présente invention sont notamment mais non limitativement des dispositifs d'alimentation vibrants tels que les trémies ou convoyeurs vibrants ou encore les entonnoirs à spirales (aussi appelés bols) vibrants.

Les produits considérés sont typiquement des éléments discrets de diamètre compris par exemple entre 100 µm et 50 cm (le diamètre étant entendu ici comme la plus grande dimension transversale de l'élément). Il s'agit par exemple de composants de montre horlogère, contacts électriques de connecteurs industriels, vis médicales, capuchons de produits cosmétiques, etc.

La mise en mouvement de l'organe mobile, par le biais de l'actionneur, crée des ondes acoustiques à différentes fréquences. Lorsqu'en outre des produits tels que définis précédemment sont présents sur la surface de réception, les produits sont également mis en mouvement à l'intérieur de l'organe mobile et viennent heurter ses parois, créant encore des ondes acoustiques correspondantes.

Une partie des ondes acoustiques ainsi créées se propage directement dans l'air. Une autre se propage dans le matériau de l'organe mobile puis dans les matériaux des éléments en contact avec l'organe mobile, puis dans l'air.

L'invention exploite le fait que les ondes acoustiques issues de la vibration de l'organe mobile sont donc caractéristiques :
- des chocs et frictions des produits contre l'organe mobile (qui dépendent de la quantité et de la distribution de produits sur la surface de réception) et
- du mouvement de l'organe mobile (qui peut différer selon son remplissage).

Dans la présente demande, on entend par capteur acoustique un capteur configuré pour transformer une information acoustique (un signal d'ondes acoustiques sonores) en signal électrique.

Un capteur acoustique a pour particularité de pouvoir détecter des ondes situées dans des plages de fréquences très larges, par exemple au-delà de 10 kHz et jusqu'à 100 kHz. Dans le cadre de la présente invention, le signal détecté par le capteur acoustique et traité lors de l'étape c) inclut avantageusement des fréquences comprises entre 10 Hz et 12 kHz. Plus spécifiquement, le traitement est avantageusement réalisé sur au moins une portion du signal généré par l'au moins un capteur acoustique, ladite portion incluant des fréquences comprises entre 2 kHz et 12 kHz.

Le capteur acoustique est associé à l'organe mobile - autrement dit positionné par rapport à cet organe - de façon à pouvoir détecter les ondes acoustiques induites par sa vibration.

Plus spécifiquement, le capteur est avantageusement configuré de façon à pouvoir détecter les ondes acoustiques induites par la vibration et s'étant propagées dans le matériau de l'organe mobile. Le capteur est pour cela en contact direct ou indirect - mais de préférence direct - avec l'organe mobile. Par contact direct, on entend un contact sans élément intermédiaire ou avec pour seul(s) élément(s) intermédiaire(s) éventuel(s) des moyens de fixation. Un capteur en contact direct avec l'organe mobile est par exemple collé, soudé, vissé, clippé ou brasé sur celui-ci. Par contact indirect, on entend un contact par le biais d'éléments intermédiaires autres que des moyens de fixation. Un capteur en contact indirect avec l'organe mobile est par exemple collé, soudé, vissé, clippé ou brasé sur un élément de la machine qui est lui-même en contact avec l'organe mobile. Comme variante, le capteur peut aussi être espacé de la machine, mais il doit alors avantageusement intégrer des moyens pour filtrer le bruit ambiant et extraire exclusivement les ondes acoustiques issues de l'organe mobile.

Grâce à sa large bande passante, le capteur acoustique permet d'obtenir sur la vibration des informations plus complètes que les capteurs de l'art antérieur, et, grâce à l'utilisation d'un algorithme d'apprentissage capable de traiter cette quantité d'informations, d'assurer une grande fiabilité dans la détermination des paramètres de remplissage de l'organe mobile.

Les capteurs de type piézoélectriques sont particulièrement préférés dans le cadre de la présente invention, ces capteurs permettant de s'affranchir des bruits parasites extérieurs à la machine. Ils sont par ailleurs robustes, peu coûteux et de très petites dimensions, ce qui leur permet d'être intégrés très facilement sur les machines, et d'y être fixés aisément, par exemple par simple collage. Plus généralement, tout type de capteur acoustique pourra être mis en œuvre, par exemple des capteurs de type électromagnétique tels que microphones à ruban ou microphones à bobine mobile, de préférence fixés directement à l'organe mobile.

Certains capteurs acoustiques peuvent aussi être configurés pour capter, en complément des ondes acoustiques sonores définies précédemment, une vibration mécanique. Dans ce cas, ces capteurs génèrent un signal électrique représentatif des informations à la fois acoustiques et mécaniques détectées.

Selon l'invention, le signal issu du ou des capteurs subit un traitement mettant en œuvre un algorithme d'apprentissage automatique pour en déduire une quantité Q et/ou une distribution D de produits sur la surface de réception.

Selon un mode de mise en œuvre, cet algorithme d'apprentissage automatique utilise au moins un réseau de neurones.

Il est possible de préentraîner l'algorithme d'apprentissage automatique en amont avec des données de préentraînement propres au type de machines vibrantes sur lesquelles le système devra être mis en œuvre. Ces données de préentraînement sont obtenues en réalisant des mesures par capteurs acoustiques sur une ou plusieurs machines vibrantes en contrôlant simultanément la quantité de produits et/ou la distribution de produits sur la surface de réception de la machine.

Selon un mode de mise en œuvre, un partitionnement des données peut être utilisé pour ce préentraînement de l'algorithme.

L'algorithme obtenu à l'issu de ce préentraînement peut être prêt à l'emploi. Toutefois, il est avantageux qu'il subisse in situ un réentraînement avec les données spécifiques de l'environnement d'utilisation. L'algorithme d'apprentissage est ainsi plus performant pour l'utilisation prévue.

Selon un mode de mise en œuvre, le procédé comprend ainsi une procédure p) de préparation de l'algorithme d'apprentissage automatique par réentraînement, sur la machine vibrante, d'un modèle existant d'apprentissage automatique.

Selon un autre mode de mise en œuvre, le procédé comprend une procédure p) de sélection d'un modèle d'algorithme d'apprentissage automatique parmi une pluralité de modèles d'apprentissage automatique préenregistrés.

Selon un mode de mise en œuvre du procédé selon l'invention, le traitement de l'étape c) comprend en outre une étape préalable c0) de transformation d'au moins une partie du signal généré par le capteur en signal fréquentiel par transformée de Fourier. Cette étape de transformation c0) permet d'établir un spectre de fréquence. L'amplitude de la vibration pour chaque fréquence constitue alors une information en soi, pouvant être utilisée comme donnée d'entrée du ou des réseaux de neurones de l'algorithme. L'analyse spectrale, rendue possible par l'utilisation d'un algorithme d'apprentissage, permet d'affiner considérablement la prédiction de la distribution et/ou la quantité de produits sur la surface de réception.

L'information finalement obtenue grâce à l'algorithme d'apprentissage automatique sur le contenu de l'organe mobile peut permettre d'ajuster l'alimentation de l'organe mobile en amont, d'envoyer un signal d'alerte, ou, de façon particulièrement avantageuse, de contrôler la commande de l'actionneur pour ajuster la délivrance des produits.

Les machines vibrantes sont généralement configurées pour délivrer des produits selon des contraintes définies par les besoins de l'utilisateur. Ces contraintes sont typiquement :
- une quantité Qd de produits à délivrer dans un temps maximum Td, ou
- un débit Rd de produits délivrés pendant un temps Td, ou encore
- l'absence d'agglomérat de produits, ou
- une combinaison de telles contraintes.

Selon un mode de mise en œuvre avantageux du procédé de l'invention, l'actionneur est commandé en fonction de la quantité Q et/ou la distribution D de produits déterminée comme indiqué précédemment de façon à satisfaire à ces contraintes.

Le procédé comprend alors :
d) la définition d'au moins un paramètre cible du signal de commande de l'actionneur parmi son amplitude A, sa fréquence f et sa durée T en fonction de la quantité Q et/ou de la distribution D de produits déterminée à l'étape c) et de contraintes prédéfinies de délivrance des produits, et
e) le réglage du signal de commande de l'actionneur en fonction dudit au moins un paramètre cible.

Selon un mode de mise en œuvre avantageux, l'étape d) comprend prioritairement la définition d'une durée T du signal de commande permettant de satisfaire les contraintes prédéfinies en fonction de la quantité Q et/ou de la distribution D. Si la durée T ne s'est pas avérée être un paramètre suffisant pour atteindre le but recherché, l'étape comprend alors en outre la définition d'une amplitude A et/ou d'une fréquence f du signal de commande, de préférence une amplitude A, permettant de satisfaire les contraintes prédéfinies.

Le contrôle peut être un contrôle ponctuel, en « boucle ouverte ». Dans ce cas le contrôle est terminé après que la succession des étapes b) à e) a été effectuée une seule fois.

Le contrôle peut aussi être un contrôle continu, en boucle fermée. Dans ce cas, les étapes b) à e) sont répétées à intervalles de temps réguliers, en se chevauchant éventuellement dans le temps.

L'invention concerne également un programme d'ordinateur comprenant des instructions qui, lorsque le programme est exécuté par un ordinateur, conduisent celui-ci à mettre en œuvre l'étape c) du procédé tel que défini précédemment, et éventuellement également ses étapes d) et e).

L'invention concerne encore un système de contrôle d'une machine vibrante comprenant un organe mobile muni d'au moins une surface de réception de produits, l'organe mobile étant adapté pour vibrer sous l'effet d'un actionneur de sorte que ladite surface de réception délivre des produits, le système de contrôle comprenant :
- au moins un capteur acoustique configuré pour générer au moins un signal représentatif des ondes acoustiques induites par la vibration de l'organe mobile, et
- un système de traitement dudit au moins un signal pour déterminer une quantité Q et/ou une distribution D de produits sur ladite surface de réception, ledit système de traitement mettant en œuvre au moins un algorithme d'apprentissage automatique.

Les caractéristiques optionnelles suivantes pourront en outre être considérées, seules ou en combinaison :
- le système de traitement est avantageusement configuré pour traiter au moins une portion du signal généré par l'au moins un capteur acoustique incluant des fréquences comprises entre 10 Hz et 12 kHz, encore plus spécifiquement entre 2 kHz et 12 kHz,
- le système de contrôle peut comprendre en outre un système de détermination d'au moins un paramètre cible du signal de commande de l'actionneur parmi son amplitude A, sa fréquence f et sa durée T en fonction de la quantité Q et/ou de la distribution D de produits déterminée(s) par le système de traitement du signal et de contraintes prédéfinies de délivrance des produits,
- le système de détermination précité peut être configuré pour déterminer prioritairement une durée T du signal de commande de l'actionneur et si nécessaire, dans un deuxième temps, une amplitude A et/ou une fréquence f du signal de commande, de préférence une amplitude A,
- le système de contrôle peut comprendre en outre un système de réglage du signal de commande de l'actionneur en fonction dudit au moins un paramètre cible déterminé,
- le capteur peut être configuré de façon à pouvoir détecter les ondes acoustiques induites par la vibration de l'organe mobile et s'étant propagées dans le matériau de l'organe mobile,
- le capteur peut être en contact direct ou indirect avec l'organe mobile, et en particulier peut être collé, soudé, vissé, clippé ou brasé sur l'organe mobile, avantageusement sur la surface inférieure de celui-ci,
- le capteur peut être un capteur piézoélectrique.

L'invention concerne enfin un ensemble incluant :
- une machine vibrante, notamment une trémie vibrante ou un entonnoir à spirales vibrant, comprenant un organe mobile muni d'au moins une surface de réception de produits et un actionneur adapté pour faire vibrer l'organe mobile de sorte que ladite surface de réception délivre des produits,
- un système de contrôle tel que défini précédemment.

### Brève description des dessins

Les particularités et les avantages de la présente invention apparaîtront avec plus de détails dans le cadre de la description qui suit avec un exemple de réalisation donné à titre illustratif et non limitatif en référence aux dessins ciannexés sur lesquels :
- La figure 1 représente un ensemble selon un exemple de réalisation, comprenant une machine vibrante et un système de contrôle selon l'invention ;
- La figure 2 illustre en vue de dessus le bac de la figure 1, dans une configuration particulière de remplissage ;
- La figure 3 est un diagramme illustrant les différentes étapes d'un procédé de contrôle selon un mode de mise en œuvre de l'invention ;
- La figure 4 illustre un procédé de contrôle selon l'invention fonctionnant en boucle fermée.

### Description détaillée

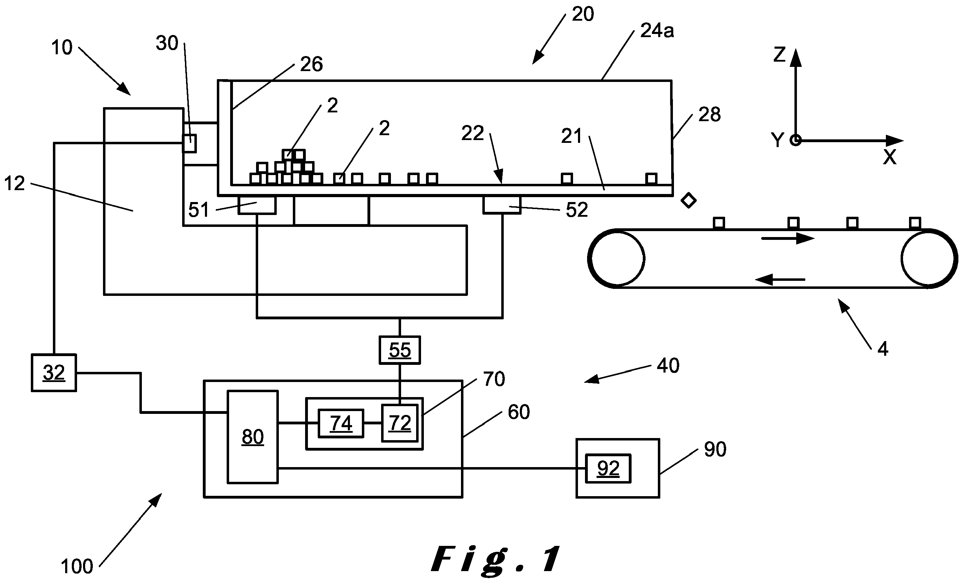

La figure 1 illustre une machine 10, ici sous la forme d'une trémie vibrante, destinée à alimenter en produits 2 un récepteur aval 4 tel qu'un convoyeur.

La trémie 10 comprend typiquement un châssis fixe 12, un organe 20 monté mobile par rapport audit châssis fixe 12 - ci-après organe mobile 20 -, et un actionneur 30 configuré pour mettre en vibration l'organe mobile 20.

L'actionneur 30 est par exemple un électroaimant monophasé configuré pour attirer (sans repousser) l'organe mobile 20 vers le châssis fixe 12 de la machine 10, et alimenté par une unité de commande électronique 32 avec un signal de commande de type sinusoïdal. Cet exemple n'est toutefois pas limitatif et d'autres types d'actionneurs adaptés pourront être utilisés.

Le signal de commande de l'actionneur est caractérisé par
- son amplitude A,
- sa durée T (i.e. la durée de vibration), et
- sa fréquence f, qui est avantageusement gardée le plus proche possible de la fréquence de résonance de façon à optimiser le rendement, et est par exemple de l'ordre de 100 Hz.

Dans l'exemple, l'organe mobile 20 se présente sous la forme d'un bac, typiquement en acier ou autre métal ou plastique, comportant un fond 21 formant surface de réception 22 pour les produits 2, et des parois latérales droite et gauche 24a, 24b et une paroi arrière 26, destinées à retenir les produits 2. A l'avant, le bac est muni d'une ouverture 28 permettant la délivrance des produits 2 vers le convoyeur aval 4. Pour la suite, on définit la direction principale X de la surface de réception 22 comme celle s'étendant depuis la paroi arrière 26 vers l'ouverture avant 28 du bac 20.

Le bac 20 est alimenté par un dispositif d'alimentation non représenté, déversant des produits 2 sur la surface de réception 22 avant mise en service de la machine et éventuellement après si la quantité de produits sur la surface de réception 22 est devenue trop faible.

La trémie vibrante 10 doit, dans le cadre de son utilisation, satisfaire à ou au moins tendre vers des contraintes de délivrance des produits imposées par l'utilisateur via une interface 90 telle qu'un ordinateur, intégrant un programme 92 (disponible sur l'ordinateur ou accessible sur internet par exemple).

Ces contraintes sont typiquement :
- une quantité Qd de produits 2 à délivrer dans un temps maximum Td, ou
- un débit Rd de produits 2 délivrés pendant un temps Td, ou encore
- l'absence d'agglomérat de produits 2 lors de la délivrance,
- ou une combinaison de ces contraintes.

Les produits 2 tombant généralement par gravité sur la surface de réception 22 depuis le dispositif d'alimentation, ils se retrouvent répartis aléatoirement sur ladite surface 22. La durée nécessaire de vibration pour délivrer un nombre déterminé q de produits, ou le débit R de produits délivrés, dépendent directement de cette répartition, qui doit donc être évaluée.

Selon l'invention, la trémie 10 est associée à un système de contrôle 40 permettant d'évaluer la quantité de produits et/ou la distribution de produits sur la surface de réception.

Selon une disposition, ce système de contrôle 40 peut être configuré pour afficher au moins certaines des informations ainsi évaluées sur l'interface utilisateur, ou pour transmettre ces informations à un autre système. Par exemple, si le système de contrôle 40 détecte un agglomérat de produits 2 sur la surface de réception 22, l'information peut être affichée sur l'interface 90 pour prévenir l'utilisateur qui dès lors peut agir pour supprimer l'agglomérat.

De façon particulièrement avantageuse, le système de contrôle 40 de l'exemple illustré permet par ailleurs de commander l'actionneur 30 en fonction des résultats de cette évaluation de façon à satisfaire aux contraintes utilisateur prémentionnées, comme il sera décrit dans la suite.

Le système de contrôle 40 comprend :
- au moins un capteur acoustique 51, 52 associé à l'organe mobile 20, et
- une unité de traitement des données 60,
qui vont être décrits à présent plus en détail en référence à la figure 1 qui illustre l'ensemble 100 incluant la machine 10 et son système de contrôle 40.

Dans l'exemple, le système de contrôle 40 comprend deux capteurs acoustiques 51, 52 de type piézoélectrique, collés sur la surface inférieure du bac 20. Chaque capteur 51, 52 est configuré pour transformer le signal des ondes acoustiques issues de la vibration de l'organe mobile et propagées dans le matériau de l'organe mobile, en signal électrique. Chaque capteur 51, 52 est avantageusement adapté pour détecter des ondes de fréquence comprises entre 10 Hz et 12 kHz, et plus spécifiquement entre 2 kHz et 12 kHz.

L'exemple illustré n'est toutefois pas limitatif. Comme variante, le système 40 peut utiliser un unique capteur ou un nombre de capteurs supérieur à deux. Également, bien que les capteurs soient positionnés de préférence sur la surface inférieure de l'organe mobile 20, ils peuvent aussi être placés à des endroits différents de cet organe 20 ou, moins avantageusement, sur un élément de la machine 10 situé lui-même en contact avec l'organe mobile. Dans certains cas, jugés cependant moins performants, le ou les capteurs peuvent aussi être placés à distance de la machine. Ils doivent alors avantageusement intégrer des moyens pour filtrer le bruit ambiant et extraire exclusivement les ondes acoustiques issues de l'organe mobile 20. Par ailleurs, bien que la fixation des capteurs par collage soit la plus aisée, les capteurs peuvent aussi être fixés par toute autre méthode ou combinaison de méthodes adaptée telle que le vissage, le soudage, le brasage, le clippage. Enfin, bien que les capteurs piézoélectriques soient jugés particulièrement intéressants dans le cadre de la présente invention, d'autres types de capteurs acoustiques peuvent être utilisés tels que les microphones à ruban ou les microphones à bobine mobile. Ces capteurs sont toutefois plus sujets au perturbations extérieures.

L'unité de traitement des données 60 comprend, dans l'exemple particulier illustré,
- un système de traitement du signal des capteurs (ci-après système de traitement) 70 recevant comme données d'entrée les signaux détectés par chaque capteur 51, 52 et mettant en œuvre un algorithme d'apprentissage automatique pour fournir comme donnée de sortie un signal représentatif d'une quantité et/ou d'une distribution de produits sur la surface de réception 22, et
- un système de réglage du signal de commande (ci-après système de réglage) 80, recevant comme données d'entrée des conditions de délivrance des produits imposées par le programme externe 92 de l'interface utilisateur 90 et, le cas échéant, le signal de sortie du système de traitement 70, et fournissant comme donnée de sortie un signal de commande de l'actionneur 30, le cas échéant après avoir déterminé au moins un paramètre parmi l'amplitude A, la durée T et la fréquence f dudit signal permettant de satisfaire les conditions de délivrance des produits.

L'unité de traitement des données 60 peut être intégrée dans un microcontrôleur, lui-même intégré sur un circuit imprimé relié à l'ordinateur de la machine d'une part et aux capteurs acoustiques d'autre part. Elle peut aussi être un programme implémenté directement sur l'ordinateur de la machine.

Si nécessaire, le système de contrôle 40 peut comprendre un convertisseur analogique numérique 55 si le signal brut fourni par l'un ou plusieurs capteurs 51, 52 est un signal analogique : dans ce cas, le signal est échantillonné et transformé en signal numérique par le convertisseur analogique numérique, avant d'être transmis au système de traitement 70.

Le système de traitement 70 inclut avantageusement une série de sous-ensembles :
- un sous-ensemble 72 de transformation d'au moins une partie de chaque signal numérique issu d'un capteur 51, 52 en signal fréquentiel,
- éventuellement un sous-ensemble de prétraitement du signal fréquentiel (non représenté), comprenant par exemple un découpage du signal fréquentiel, et
- un sous-ensemble 74 de prédiction mathématique mettant en œuvre un algorithme d'apprentissage automatique pour traiter le signal fréquentiel éventuellement prétraité et en déduire une quantité Q et/ou d'une distribution D de produits sur la surface de réception 22.

La transformation de chaque signal numérique issu d'un capteur 51, 52 en signal fréquentiel permet d'établir l'amplitude pour chaque fréquence du signal, et d'utiliser ces informations fréquentielles comme données d'entrée du sous-ensemble de prédiction mathématique (algorithme d'apprentissage automatique). Lorsque plusieurs capteurs 51, 52 différents sont utilisés, comme dans le cas de l'exemple illustré, les signaux des différents capteurs sont simplement utilisés comme autant d'entrées différentes de l'algorithme d'apprentissage automatique.

L'algorithme d'apprentissage automatique du sous-ensemble 74 utilise par exemple au moins un réseau de neurones.

Préférentiellement, il utilise au moins trois réseaux de neurones, dont par exemple :
- un premier réseau neuronal configuré pour sortir une valeur binaire, selon que la surface de réception 22 est vide ou non,
- un deuxième réseau neuronal configuré pour sortir une valeur comprise par exemple entre 0 et 1 et proportionnelle à un niveau de remplissage de la surface de réception 22,
- un troisième réseau neuronal configuré pour sortir une valeur comprise par exemple entre 0 et 1 et représentative de la position des produits 2 sur la surface de réception 22, notamment par rapport à un repère défini ou plus simplement une direction définie (la direction principale X).

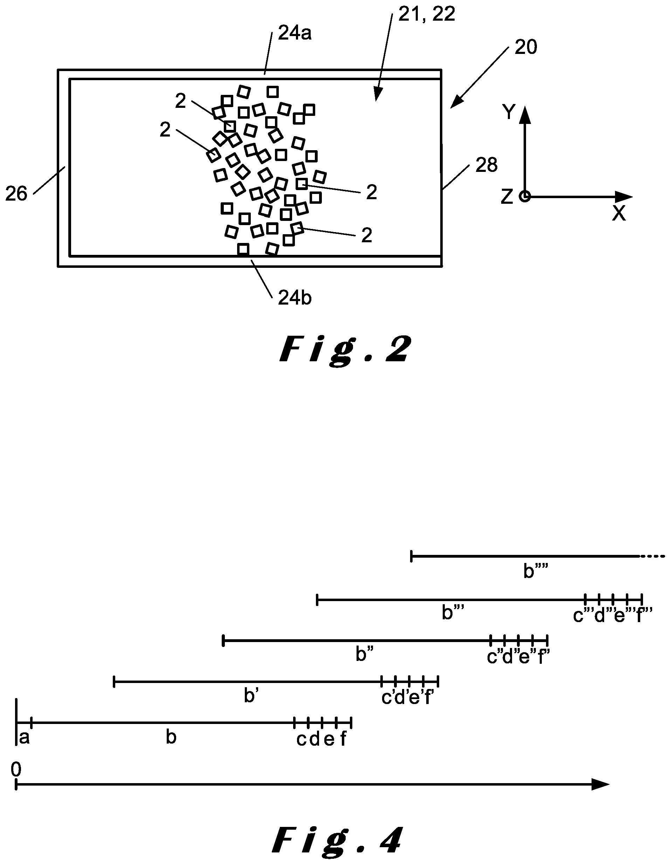

Si l'on prend par exemple la configuration illustrée sur la figure 2, le premier réseau neuronal détectera que le bac 20 n'est pas vide, le second réseau neuronal détectera que la surface de réception 22 est recouverte à hauteur d'environ 15% et sortira une valeur de 0.15, et le troisième réseau neuronal sortira une valeur de 0.5 représentative de la concentration de produits au centre du bac, dans la direction X.

Le système de traitement 70 peut utiliser un algorithme de type connu, préentraîné avec des données de préentraînement adaptées à l'utilisation prévue du système de contrôle 40. Ces données sont par exemple des résultats de mesures réalisées sur des machines test, à l'aide de capteurs acoustiques et en contrôlant simultanément la quantité de produits et/ou la distribution de produits sur la surface de réception de la machine. L'entraînement de l'algorithme peut avantageusement mettre en œuvre un partitionnement des données.

Toutefois, le système de contrôle 40 est rendu plus performant si, avant ou pendant l'utilisation industrielle de la machine 10, l'algorithme ainsi préentraîné est réentraîné avec les données spécifiques de son environnement final d'utilisation, autrement dit de la machine 10 et des produits 2 que cette machine 10 devra traiter.

On peut par exemple procéder, avant la première utilisation industrielle de la machine ou dans le cadre d'une opération de maintenance, à une procédure 0) d'optimisation de l'algorithme d'apprentissage automatique du système de contrôle par réentraînement, sur la machine 10, d'un modèle existant d'apprentissage automatique. Ce modèle existant peut être l'algorithme préentraîné lors de tests externes comme expliqué précédemment, ou celui utilisé jusqu'à présent sur la machine, mais que l'on souhaite adapter à de nouvelles productions ou optimiser encore.

La procédure d'optimisation 0) comprend par exemple au moins une itération, et de préférence une pluralité d'itérations, de la succession d'étapes suivantes :
- le chargement de l'organe mobile 20 avec une quantité connue Qc de produits disposés sur la surface de réception 22 selon une distribution connue Dc,
- la mise en vibration de l'organe mobile 20,
- la génération, à l'aide d'au moins un capteur acoustique 51, 52, d'au moins un signal représentatif des ondes acoustiques induites par la vibration de l'organe mobile et le traitement de ce signal pour en extraire des données d'entrée, par exemple des couples [amplitude, fréquence] obtenus en convertissant le signal en signal fréquentiel,
- l'entraînement du modèle avec les valeurs connues [Qc, Dc] et les couples [amplitude, fréquence] ainsi déterminés.

Comme variante, il est aussi possible d'optimiser le système de contrôle en opérant une sélection d'un modèle d'algorithme d'apprentissage automatique parmi une pluralité de modèles d'apprentissage automatique préenregistrés, en fonction de la pertinence des résultats obtenus lors de tests sur la machine 10.

Dans ce cas, la procédure préalable 0) comprend par exemple
- le chargement de l'organe mobile 20 avec une quantité connue Qc de produits disposés selon une distribution connue Dc,
- la mise en vibration de l'organe mobile 20,
- la détermination, à l'aide de chacun parmi les N modèles d'apprentissage préenregistrés, d'une quantité Qn et d'une distribution Dn,
- la comparaison des résultats [Q1, D1], ..., [QN, DN] avec les valeurs connues [Qc, Dc], et
- la sélection de celui parmi les N modèles préenregistrés dont les résultats [Qn, Dn] sont les plus proches des valeurs connues [Qc, Dc].

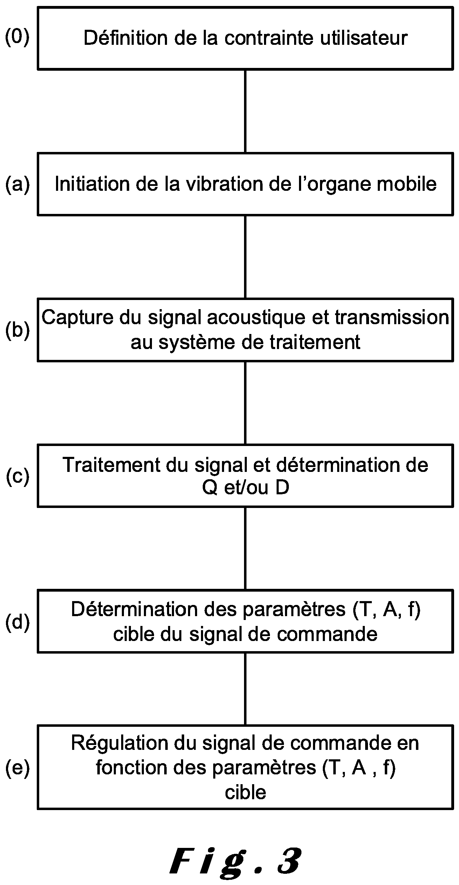

La figure 3 illustre schématiquement un exemple de mise en œuvre du procédé de contrôle selon l'invention, une fois l'algorithme établi.

L'utilisateur définit tout d'abord ses contraintes. Il requiert par exemple, via l'interface 90, la délivrance d'un certain nombre Qd de produits 2 dans un délai maximum Td. Le programme externe 92 lié à l'interface envoie un signal représentatif de ces contraintes [Qd, Td] au système de réglage 80 (étape 0).

Le système de réglage 80 émet un signal initial de commande à destination de l'unité de commande électronique 32 de l'actionneur 30 pour faire vibrer le bac 20 (étape a) selon des paramètres de durée T, d'amplitude A et de fréquence f standards ou choisis par le système 80.

Chaque capteur acoustique 51, 52 capte le signal des ondes acoustiques issues de la vibration du bac 20. Un signal, par exemple analogique, correspondant à la capture d'un extrait de signal acoustique d'une durée d'écoute t1, par exemple de 250 millisecondes, est envoyé au système de traitement 70, via le convertisseur 55 pour sa transformation préalable en signal numérique (étape b).

Le système de traitement 70 transforme alors ce signal en signal fréquentiel puis intègre les informations de ce signal fréquentiel dans l'algorithme d'apprentissage automatique. Au bout d'un temps de traitement t2, par exemple de 10 millisecondes, le système de traitement 70 livre une estimation de la quantité Q et/ou de la distribution D des produits sur la surface de réception 22 (étape c).

Un signal représentatif de cette estimation est transmis au système de réglage 80, qui détermine alors les paramètres d'amplitude A, durée T et fréquence f du signal de commande qui permettent de satisfaire à la demande du programme externe 92 (étape d).

Le système de réglage 80 transmet finalement à l'unité de commande électronique 32 de l'actionneur 30 un signal de commande correspondant aux paramètres déterminés, ou, dans certains cas, aucun signal (étape e), et l'actionneur fonctionne alors en conséquence.

Le contrôle peut être un contrôle ponctuel, en « boucle ouverte », ou il peut s'agir d'un contrôle en boucle fermée : dans ce dernier cas, les étapes b, c, d, e se répètent à intervalle régulier, comme illustré sur la figure 4. L'intervalle est avantageusement inférieur à t1 de sorte que les captures de signaux se chevauchent. Dans l'exemple, les captures sont décalées les unes par rapport aux autres d'un intervalle de 100 millisecondes. La durée restante de vibration peut alors être réévaluée après chaque prédiction. Avec ce type de contrôle il est en particulier possible de mesurer et d'ajuster quasiment en temps réel la vitesse de déplacement des pièces et le flux d'alimentation.

Selon un mode de mise en œuvre, l'étape d) comprend prioritairement la définition d'une durée T du signal de commande permettant de satisfaire les contraintes prédéfinies en fonction de la quantité Q et/ou de la distribution D prédites à l'étape c), les paramètres d'amplitude et de fréquence étant gardés constants.

La durée T peut être déterminée en calculant:
- la durée Tₐ nécessaire pour amener des produits près de l'ouverture avant 28 de l'organe mobile 20, en fonction de la distance séparant les produits de l'ouverture avant 28 - issue des informations acquises sur la distribution - et de la vitesse moyenne de déplacement des produits qui est un paramètre prédéfini pour une amplitude et une fréquence donnée de vibration : Cette durée Tₐ est égale à 0 si les produits sont déjà placés devant l'ouverture.
- la durée T_{b} nécessaire pour délivrer le nombre requis de produits, une fois les produits placés devant l'ouverture 28,
avec la durée T égale à la somme des durée Tₐ et T_{b} moins le temps de vibration déjà écoulé (depuis le début de la capture du signal acoustique par les capteurs pour l'itération considérée).

Si l'unité de traitement fonctionne en boucle ouverte, le système de réglage calcule typiquement la durée T et envoie un signal de commande avec cette durée T et l'amplitude A et la fréquence f maintenues inchangées, à l'unité de commande électronique 32. Si la durée de vibration T calculée est inférieure au temps t1 d'acquisition du signal acoustique, alors le système de réglage 80 décide de stopper tout simplement la vibration et d'arrêter l'actionneur 30. Aucun signal de commande n'est envoyé à l'unité de commande électronique 32.

Si l'unité de traitement des données 60 fonctionne en boucle fermée, alors le calcul de durée T indiqué précédemment est refait à chaque itération en utilisation la nouvelle valeur de distribution D prédite à l'étape c), et le signal de commande de l'actionneur est ajusté en temps réel.

Si toutefois le flux est perçu comme trop important (par exemple si le programme externe 92 requiert une vitesse de délivrance des produits plus faible que la vitesse nominale de la machine ou plus faible que la vitesse de la machine au moment de la requête, ou si la durée de vibration T déterminée est trop souvent inférieure au temps t1 d'acquisition du signal acoustique) ou trop faible, le système de réglage 80 détermine une amplitude A et/ou une fréquence f modifiée, de préférence une amplitude A, pour le signal de commande de l'actionneur et transmet un signal de commande avec cette amplitude A et/ou cette fréquence f ajustée à l'unité de commande électronique 32 de l'actionneur 30. En effet, plus l'accélération est élevée, plus les produits 2 vont vite et volent longtemps à l'intérieur de l'organe mobile 20. Or l'accélération est proportionnelle au carré de la fréquence et à l'amplitude de mouvement. En modifiant l'amplitude A et/ou la fréquence f du signal de commande de l'actionneur 30, on peut donc ajuster la vitesse de déplacement des produits 2 vers l'avant de la surface de réception 22 et ajuster la vitesse de délivrance des produits 2.

## Revendications

1. Procédé de contrôle d'une machine vibrante (10) comprenant un organe mobile (20) muni d'au moins une surface de réception (22) de produits (2), l'organe mobile (20) étant adapté pour vibrer sous l'effet d'un actionneur (30) de sorte que ladite surface de réception (22) délivre des produits (2), le procédé de contrôle comprenant :
a) la transmission d'un signal de commande à l'actionneur (30) pour faire vibrer l'organe mobile (20),
b) la génération, à l'aide d'au moins un capteur acoustique (51, 52), d'au moins un signal représentatif des ondes acoustiques induites par la vibration de l'organe mobile (20), et
c) le traitement dudit au moins un signal généré à l'étape b) pour déterminer une quantité Q et/ou d'une distribution D de produits (2) sur ladite surface de réception (22), ledit traitement mettant en œuvre au moins un algorithme d'apprentissage automatique.

2. Procédé de contrôle selon la revendication 1, dans lequel à l'étape c), le traitement est réalisé sur au moins une portion du signal généré par l'au moins un capteur acoustique (51, 52), ladite portion incluant des fréquences comprises entre 2 kHz et 12 kHz.

3. Procédé de contrôle selon la revendication 1 ou 2, dans lequel l'étape c) comprend une étape c0) de transformation dudit signal en signal fréquentiel de vibration par transformée de Fourier.

4. Procédé de contrôle selon l'une quelconque des revendications 1 à 3, comprenant en outre
d) la définition d'au moins un paramètre cible du signal de commande de l'actionneur (30) parmi son amplitude A, sa fréquence f et sa durée T en fonction de la quantité Q et/ou de la distribution D de produits (2) déterminée à l'étape c) et de contraintes prédéfinies de délivrance des produits (2), et
e) le réglage du signal de commande de l'actionneur (30) en fonction dudit au moins un paramètre cible.

5. Procédé de contrôle selon la revendication 4, dans lequel les étapes b) à e) sont répétées à intervalles de temps réguliers.

6. Procédé de contrôle selon la revendication 4 ou 5, dans lequel les contraintes prédéfinies comprennent une quantité Qd de produits à délivrer dans un temps maximum Td et/ou un débit Rd de produits délivrés pendant un temps Td et/ou l'absence d'agglomérat de produits.

7. Procédé de contrôle selon l'une quelconque des revendications 1 à 6, dans lequel l'algorithme d'apprentissage automatique utilise au moins un réseau de neurones.

8. Procédé de contrôle selon l'une quelconque des revendications 1 à 7, comprenant une procédure préalable p) de préparation d'un algorithme d'apprentissage automatique par réentraînement, sur la machine vibrante (10), d'un modèle existant d'apprentissage automatique.

9. Procédé de contrôle selon l'une quelconque des revendications 1 à 8, comprenant une procédure préalable p) de sélection d'un modèle d'algorithme d'apprentissage automatique parmi une pluralité de modèles d'apprentissage automatique préenregistrés.

10. Système (40) de contrôle d'une machine vibrante (10) comprenant un organe mobile (20) muni d'au moins une surface de réception (22) de produits (2), l'organe mobile (20) étant adapté pour vibrer sous l'effet d'un actionneur (30) de sorte que ladite surface de réception (22) délivre des produits (2), le système de contrôle (40) comprenant :
- au moins un capteur acoustique (51, 52) configuré pour générer au moins un signal représentatif des ondes acoustiques induites par la vibration de l'organe mobile (20), et
- un système (70) de traitement dudit au moins un signal pour déterminer une quantité Q et/ou une distribution D de produits (2) sur ladite surface de réception (22), ledit système de traitement (70) mettant en œuvre au moins un algorithme d'apprentissage automatique.

11. Système de contrôle (40) selon la revendication 10, comprenant en outre un système (80) de détermination d'au moins un paramètre cible du signal de commande de l'actionneur parmi son amplitude A, sa fréquence f et sa durée T en fonction de la quantité Q et/ou de la distribution D de produits déterminée(s) par le système de traitement du signal et de contraintes prédéfinies de délivrance des produits.

12. Système de contrôle (40) selon la revendication 11, comprenant en outre un système (80) de réglage du signal de commande de l'actionneur en fonction dudit paramètre cible.

13. Système de contrôle (40) selon l'une quelconque des revendications 10 à 12, dans lequel le capteur (51, 52) est un capteur piézoélectrique.

14. Ensemble (100) incluant :
- une machine vibrante (10), notamment une trémie vibrante ou un entonnoir à spirales vibrant, comprenant un organe mobile (20) muni d'au moins une surface de réception (22) de produits (2) et un actionneur (30) adapté pour faire vibrer l'organe mobile (20) de sorte que ladite surface de réception (22) délivre des produits (2),
- un système de contrôle (40) selon l'une quelconque des revendications 10 à 13.

15. Programme d'ordinateur comprenant des instructions qui, lorsque le programme est exécuté par un ordinateur, conduisent celui-ci à mettre en œuvre l'étape c) du procédé selon l'une quelconque des revendications 1 à 9.

16. Programme d'ordinateur selon la revendication 15 comprenant en outre des instructions qui, lorsque le programme est exécuté par un ordinateur, conduisent celui-ci à mettre en œuvre les étapes d) et e) du procédé selon la revendication 4.
